(19) Europäisches Patentamt
European Patent Office
Office européen des brevets

(11) EP 0 543 171 B1

(12) **EUROPÄISCHE PATENTSCHRIFT**

(45) Veröffentlichungstag und Bekanntmachung des Hinweises auf die Patenterteilung:
**05.02.1997 Patentblatt 1997/06**

(51) Int. Cl.$^6$: **B01D 71/56**

(21) Anmeldenummer: **92118115.2**

(22) Anmeldetag: **22.10.1992**

(54) **Semipermeable, poröse, asymmetrische Polyetheramidmembranen**

Semi-permeable porous asymmetric polyether amide membranes

Membranes en polyétheramide semi-perméables poreuses asymétriques

(84) Benannte Vertragsstaaten:
**BE CH DE DK FR GB IT LI NL SE**

(30) Priorität: **26.10.1991 DE 4135341**

(43) Veröffentlichungstag der Anmeldung:
**26.05.1993 Patentblatt 1993/21**

(73) Patentinhaber: **HOECHST AKTIENGESELLSCHAFT**
**65926 Frankfurt am Main (DE)**

(72) Erfinder:
- **Schneider, Jürgen, Dr.**
  **W-6273 Waldems-Bermbach (DE)**
- **Wagener, Reinhard, Dr.**
  **W-6233 Kelkheim/Ts. (DE)**
- **Kreuder, Willi, Dr.**
  **W-6500 Mainz (DE)**
- **Delius, Ulrich, Dr.**
  **W-6000 Frankfurt/M 71 (DE)**
- **Wildhardt, Jürgen**
  **W-6274 Hünstetten-Wallrabenstein (DE)**

(56) Entgegenhaltungen:
**EP-A- 0 077 691**
**EP-A- 0 382 009**
**EP-A- 0 489 418**
**EP-A- 0 501 425**
**WO-A-88/08738**
**DE-A- 3 342 823**
**US-A- 4 217 227**

- **PATENT ABSTRACTS OF JAPAN vol. 14, no. 086 (C-690)19. Februar 1990**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Rank Xerox (UK) Business Services
2.13.13/3.4

## Beschreibung

Seit der Einführung asymmetrischer Membranen aus Celluloseacetat durch Loeb und Sourirajan, (S. Sourirajan, Reverse Osmosis, Logos Press, London 1970) und aus hydrophoben Polymerisaten (US-PS 3,615,024) sind zahlreiche Membranen, insbesondere für Separation von in Wasser gelösten nieder- und hochmolekularen Bestandteilen entwickelt und vorgeschlagen worden, deren Struktur und Eignung in der Literatur angegeben (Desalination, 35(1980), 5-20) und die auch in industrieller Praxis oder für medizinische Zwecke mit Erfolg erprobt wurden.

Viele von den beschriebenen Membranen haben zur Lösung spezifischer Aufgaben besonders vorteilhafte Eigenschaften. Infolge ihres chemischen Aufbaus und ihrer baulichen Struktur können die einzelnen Membranen jeweils nur für ganz spezielle Separationsprobleme optimal geeignet sein. Hieraus resultiert die grundlegende Forderung, für neue Aufgabenstellungen stets neue Membranen zu entwickeln.

In der EP-A-0 082 433 wird eine übersichtliche Darstellung über die Vor-und Nachteile bereits bekannter Membranen gegeben. So gibt es beispielsweise hydrophile, asymmetrische Membranen aus Celluloseacetat mit befriedigenden antiadsorptiven Eigenschaften, die aber bezüglich ihrer thermischen und chemischen Beständigkeit sehr zu wünschen übrig lassen. Membranen aus Polysulfonen oder ähnlichen Polymeren besitzen zwar eine gute thermische und chemische Beständigkeit, allerdings besteht bei solchen Membranen wegen der hydrophoben Eigenschaften der eingesetzten Polymeren eine ausgeprägte Neigung, gelöste Stoffe zu adsorbieren, wodurch sich die Membran verstopft. Die in der EP-A-0 082 433 beschriebenen Mischungen aus Polysulfon und Polyvinylpyrrolidon beseitigen zwar den durch die Hydrophobie des Polysulfons bedingten Nachteil, diese Mischungen sind jedoch gegenüber der Einwirkung von organischen Lösemitteln empfindlich.

In der EP-A-0 382 009 wird eine semipermeable Membran beschrieben, die ausgeprägte hydrophile Eigenschaften besitzt und die darüber hinaus gegen verseifende oder oxidative Reagenzien und gegen Wärmeeinwirkung unempfindlich ist. Sie ist außerdem unempflindlich gegen organische Lösemittel und gegen Mikroorganismen, und sie zeigt eine geringe Proteinabsorption. Die erfindungsgemäße Membran enthält eine homogen mischbare Polymerlegierung aus einem aromatischen Polyamid und Polyvinylpyrrolidon.

In der EP-A-0 489 418, die nach dem Prioritätsdatum der vorliegenden Anmeldung offengelegt wurde, wird ein Verfahren zur Herstellung von Mehrkomponenten-Gasseparationsmembranen offenbart. Das Verfahren beinhaltet das Gießen von zwei oder mehreren Polymerlösungen und das teilweise Entfernen des Lösungsmittels um die Gasseparationsschicht der Membran zu bilden. Die Membran wird dann gequencht, damit ihre Struktur einfriert und anschließend wird der Rest des Lösungsmittels entfernt um die Gasseparationsmembran zu bilden.

In der EP-A-0 501 425, die ebenfalls nach dem Prioritätsdatum der vorliegenden Anmeldung offengelegt wurde, wird eine semipermeable Membran für die Mikro-, Nano- und Ultrafiltration offenbart, bestehend aus einem Trägermaterial und einer auf diesem haftenden semipermeablen Schicht. Das Trägermaterial ist ein Gewebe oder ein Vlies auf der Basis eines Polyphenylensulfids, eines Polyetherketons oder eines Polyaramids. Zur Herstellung der semipermeablen Membran werden die Polymeren zunächst in einem Lösemitel gelöst, filtriert und entgast. In einem darauffolgenden Schritt wird nach dem Phaseninversionsverfahren eine Membran hergestellt, wobei als Losemittel für Polyetherketone $H_2SO_4$, $CF_3$-$SO_3H$, HF, $Cl_2HC$-COOH oder eine Mischung von $Cl_2HC$-COOH und $H_2SO_4$ und für Polyaramide N-Methylpyrrolidon, Dimethylacetamid oder Dimethylformamid eingesetzt werden.

Hydrophilie und gleichzeitig Resistenz gegenüber Lösemitteln findet man bei Membranen aus Celluloseregenerat; diese sind aber in sauren oder alkalischen Medien relativ leicht hydrolisierbar, und darüber hinaus werden sie von Mikroorganismen leicht angegriffen.

Der Erfindung liegt daher die Aufgabe zugrunde, semipermeable, poröse, asymmetrische Membranen bereitzustellen, die gegenüber chemischen und thermischen Einwirkungen beständig sind, die sich auf einfache und wirtschaftliche Weise herstellen lassen und deren Membraneigenschaften sich leicht und je nach Anwendungsgebiet variieren lassen.

Gelöst wird diese Aufgabe durch eine semipermeable, poröse, asymmetrische, trägerfreie oder auf einem Trägervlies oder -gewebe angeordnete Membran für Mikro-, Nano- und Ultrafiltration, die aus einem Copolyaramid besteht, das aus mindestens zwei unterschiedlichen, wiederkehrenden Struktureinheiten der Formel (I)

$$-\overset{\overset{\displaystyle O}{\|}}{C}-Ar-\overset{\overset{\displaystyle O}{\|}}{C}- \qquad (I)$$

und Struktureinheiten der Formel (II)

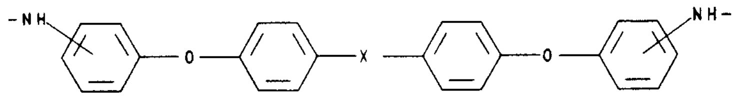

(II)

zusammengesetzt ist,
wobei das Molverhältnis (II) zu (I) 0,90 bis 1,10 beträgt und

-Ar- einen zweiwertigen, aromatischen oder heteroaromatischen Rest bedeutet, wobei sich die zwei Carbonylgruppen an nicht benachbarten Ringkohlenstoffatomen (d.h. in para- oder meta- Stellung) befinden und der Ar- Rest gegebenenfalls mit einem oder zwei verzweigten oder unverzweigten $C_1$-$C_3$-Alkyl- oder Alkoxyresten, Aryl- oder Aryloxyresten oder $C_1$-$C_6$-Perfluoralkyl- oder Perfluoralkoxyresten oder mit Fluor, Chlor, Brom oder Jod substituiert ist, und

-X- eine Gruppe $-C(CH_3)_2-$, $-C(CF_3)_2-$, -CO-, -SO-, $-SO_2-$, $-CH_2-$, -S- oder -O-oder eine direkte Bindung bedeutet.

Erfindungsgemäß sind also zur Bildung der in der Membran enthaltenen Polyaramide mindestens zwei unterschiedliche Dicarbonsäurederivate der Formel (I) sowie Diaminkomponenten der Formel (II) notwendig, wobei das Verhältnis von (II) zu (I) 0,90 bis 1,10 beträgt. Vorzugsweise werden stöchiometrische Mengen an Carbonsäurederivaten und Diaminkomponenten eingesetzt.

Zur Herstellung der erfindungsgemäß benötigten Polyaramide sind folgende Verbindungen geeignet:
mindestens zwei unterschiedliche Dicarbonsäurederivate der Formel (I')

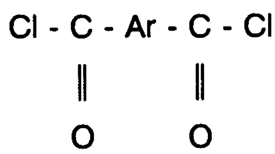

(I')

beispielsweise Terephthalsäuredichlorid und/oder Isophthalsäuredichlorid, wobei der aromatische Ring gegebenenfalls mit einem oder zwei verzweigten oder unverzweigten $C_1$-$C_3$-Alkyl- oder Alkoxyresten, Aryl- oder Aryloxyresten oder $C_1$-$C_6$-Perfluoralkyl- oder Perfluoralkoxyresten oder mit Fluor, Chlor, Brom oder Jod substituiert ist.
Aromatische Diamine der Formel (II'),

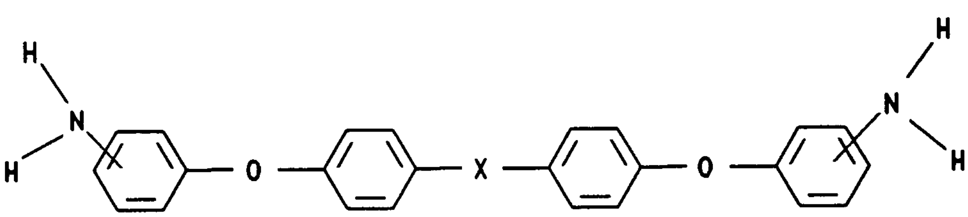

(II')

beispielsweise 2,2'-Bis[4-(4'-aminophenoxy)-phenyl]-propan, Bis[3-(3'-aminophenoxy)-phenyl]-sulfon, Bis[4-(4'-aminophenoxy)-phenyl]-sulfon, Bis[4-(4'-aminophenoxy)-phenyl]-methan, 2,2'-Bis[4-(4'-aminophenoxy)-phenyl]-hexafluorpropan.

Die Lösungskondensation aromatischer Dicarbonsäuredichloride der Formeln (I') mit aromatischen Diaminen der Formeln (II') erfolgt in aprotischen polaren Lösungsmitteln vom Amidtyp, wie z. B. in N,N-Dimethylacetamid oder insbesondere in N-Methyl-2-pyrrolidon (NMP). Gegebenenfalls können diesen Lösungsmitteln in bekannter Weise zur Erhöhung der Lösefähigkeit bzw. zur Stabilisierung der Polyamidlösungen Halogenidsalze der ersten und zweiten Nebengruppe des Periodischen Systems zugegeben werden. Bevorzugte Zusätze sind Calciumchlorid und/oder Lithiumchlorid.

Die Polykondensationstemperaturen liegen üblicherweise zwischen -20° C und + 120° C, bevorzugt zwischen + 10° C und + 100° C. Besonders gute Ergebnisse werden bei Reaktionstemperaturen zwischen + 10° C und + 80° C erzielt. Die Polykondensationsreaktionen werden vorzugsweise so ausgeführt, daß nach Abschluß der Reaktion 3 bis 50 Gew.-%, vorzugsweise 5 bis 35 Gew.-% an Polykondensat in der Lösung vorliegen.

Die Polykondensation kann in üblicher Weise, z. B. durch Zugabe von monofunktionellen Verbindungen, wie Benzoylchlorid gestoppt werden. Nach Beendigung der Polykondensation, d. h. wenn die Polymerlösung den zur Weiterverarbeitung erforderlichen Staudinger-Index erreicht hat, wird der entstandene an das Amidlösungsmittel gebundene Chlorwasserstoff durch Zugabe basischer Substanzen neutralisiert. Geeignet sich dafür beispielsweise Lithiumhydroxyd, Calciumhydroxid, insbesondere Calciumoxid. Nach dem Neutralisieren werden die Lösungen filtriert und entgast und aus diesen Lösungen Membranen gezogen. Die Konzentration der Lösungen wie auch das Molekulargewicht der Polymeren stellt den wichtigsten Herstellungsparameter dar, da sich auf diese Weise die Membraneigenschaften wie Porosität, mechanische Stabilität, Permeabilität und Rückhaltevermögen einstellen lassen.

Der Staudinger-Index ist ein Maß für die mittlere Kettenlänge der entstandenen Polymere. Der Staudinger-Index des Polyaramids liegt im Bereich von 50 und 1000 $cm^3/g$, bevorzugt im Bereich von 100 und 500 $cm^3/g$, besonders bevorzugt im Bereich von 150 und 350 $cm^3/g$. Er wurde bestimmt an Lösungen von jeweils 0,5 g Polymer in 100 ml 96 %iger Schwefelsäure bei 25° C.

Unter Staudinger-Index $[\eta]$ (Grenzviskosität, intrinsic viscosity) wird der Ausdruck

$$\lim_{C_2 \to O} \frac{\eta sp}{C_2} = [\eta]$$

verstanden, wobei

$C_2$ = Konzentration des gelösten Stoffes
$\eta_{sp}$ = spezifische Viskosität

$$\eta_{sp} = \frac{\eta}{\eta_1} - 1$$

$\eta$ = Viskosität der Lösung
$\eta_1$ = Viskosität des reinen Lösemittels

ist.

Zur Herstellung der erfindungsgemäßen Membran aus Polyaramiden wird die bereits beschriebene Lösung der Polyamide filtriert, entgast, und dann in bekannter Weise nach dem Phaseninversionsverfahren (Robert E. Kesting, "Synthetic Polymeric Membranes", 2nd Ed., 1985, S. 237 ff.) eine asymmetrische poröse Membran hergestellt. Zu diesem Zweck wird die Polymerisatlösung auf eine möglichst plane Unterlage als flüssige Schicht ausgebreitet. Die plane Unterlage kann beispielsweise aus einer Glasplatte oder aus einer Metalltrommel bestehen. Danach läßt man auf die flüssige Schicht Fällflüssigkeit einwirken, die mit dem Lösungsmittel der Lösung mischbar ist, in der aber die in der Polymerisatlösung gelösten Polymerisate als Membran ausgefällt werden.

Als weitere Lösemittelbestandteile kommen leichtflüchtige Substanzen wie beispielsweise Tetrahydrofuran, Aceton oder Methylenchlorid in Frage. Als Fällflüssigkeit kommen Wasser, ein- oder mehrwertige Alkohole wie Methanol, Ethanol, Isopropanol, Ethylenglykol oder Glycerin in Frage, darüber hinaus Mischungen dieser Substanzen untereinander oder mit aprotischen, polaren Lösemitteln wie N,N-Dimethylformamid, N,N-Dimethylacetamid, Dimethylsulfoxid, insbesondere aber mit N-Methyl-2-pyrrolidon.

Durch die Einwirkung der Fällflüssigkeit auf die flüssige Schicht aus Polymerlösung werden die in dieser gelösten Polyaramide unter Ausbildung einer porösen Folie mit asymmetrischer Porenstruktur ausgefällt.

Die Trennleistung bzw. das Rückhaltevermögen der erfindungsgemäßen Membranen lassen sich durch eine nachträgliche Behandlung bei einer Temperatur im Bereich von 60-140°C, vorzugsweise im Bereich von 60-100°C, mit einer

Flüssigkert, beispielsweise mit Wasser, Mischungen von Wasser mit ein-oder mehrwertigen Alkoholen beispielsweise auch Polyethylenglykol oder mit polar, aprotischen Lösungsmitteln vom Amidtyp, wie N-Methylpyrrolidon, N,N-Dimethylformamid, Dimethylsulfoxid oder Mischungen dieser Flüssigkeiten untereinander oder auch durch eine Behandlung mit, gegebenenfalls überhitztem Wasserdampf gezielt variieren.
Eine thermische Nachbehandlung der erfindungsgemäßen Membranen führt zu einer Verdichtung der aktiven Schicht, so daß auf diese Weise eine nachträgliche Einstellung des Rückhaltevermögens möglich ist.

Bei der Verfahrensdurchführung läßt man die Fällflüssigkeit vorteilhaft so lange auf die durch diese ausgefällte Membran einwirken, bis aus dieser praktisch das gesamte Lösungsmittel durch Fällflüssigkeit ersetzt ist. Danach wird die gebildete Membran von Fällflüssigkeit befreit, beispielsweise dadurch, daß man die Membran direkt in einem Luftstrom mit einer relativen Feuchtigkeit im Bereich von 20 bis 100 % trocknet oder aber zunächst mit einem Weichmacher wie Glycerin, oder Glycerin/Wasser-Gemischen behandelt und danach trocknet.
Zur Herstellung von Membranen, die auf einer Trägerschicht angeordnet sind, welche für strömungsfähige Medien durchlässig ist, geht man wie vorstehend angegeben vor, verwendet jedoch als Unterlage zur Ausbildung der Membranschicht als Träger für diese ein Gewebe oder ein Vlies, z. B. aus Kunststoff, beispielsweise Polypropylen, Polyethylen und/oder Polyethylenterephthalat, oder aus Papier und beläßt nach Ausbildung der Membranschicht diese auf der Unterlage. Die Membran kann aber auch zunächst trägerfrei hergestellt und erst danach auf einen durchlässigen Träger aufgebracht werden. Die so hergestellten Flachmembranen besitzen ohne Träger eine Dicke im Bereich von 10 bis 300 μm, insbesondere im Bereich von 20 bis 150 μm. In bekannter Weise (Mark C. Porter, "Handbook of Industrial Membrane Technology", 1990, S. 149ff) sind aus der Lösung der Polyaramide auch Hohlfäden bzw. Kapillaren herstellbar, indem man die Polymerisatlösung nach dem Stande der Technik durch eine entsprechend ausgebildete formgebende Ringspalt- bzw. Hohlnadeldüse in Fällflüssigkeit einspinnt. Die Wandstärke derartiger Kapillaren oder Hohlfasern liegt üblicherweise im Bereich von 20 bis 500 μm, insbesondere 80-200 μm.

Wird die Membran nach der Koagulation mit Glycerin getränkt, so kann sie beispielsweise im Bereich von 5 bis 60 % Glycerin, bezogen auf ihr Gesamtgewicht, enthalten; die derart imprägnierte Membran wird getrocknet, z. B. bei einer Temperatur von 50° C.
Die erfindungsgemäße Membran eignet sich außer für die dem Fachmann bekannten Standardanwendungen poröser Membranen, wie Druckfiitration (Mikro-, Nano- und Ultrafiltration), Diafiltration und Dialyse ebenfalls als Trägermembran für permselektive Schichten (z.B. für Gasseparation, Pervaporation), die direkt auf oder in der Membran erzeugt werden. So können beispielsweise "ultradünne" Schichten ($\leq$ 1 μm) aus Polymeren mit funktionellen Gruppen (z. B. Silikone, Celluloseether, Fluorcopolymere) auf Wasser gespreitet werden, von dort auf die Membranoberfläche aufgebracht und z. B. durch Reaktion mit einem Diisocyanat kovalent fixiert werden, um somit höhere Permselektivitäten zu erzielen. Weitere Techniken zum Übertragen von dünnen permselektiven Schichten sind dem Fachmann bekannt. Analog eignen sich die erfindungsgemäßen Membranen auch als Träger reaktiver Moleküle, beispielsweise um Enzyme oder Antikoagulantien wie Heparin nach dem Stande der Technik zu fixieren.
Die Dicke der erfindungsgemäßen Membrane ohne Trägerschicht liegt im Bereich von 10 bis 300 μm, insbesondere von 20 bis 120 μm.

Beispiel:

Membranen aus Copolyaramiden

Für die in dem Beispiel untersuchten Membranen wurden die entsprechenden Polyaramide wie vorne beschrieben in N-Methylpyrrolidon (NMP) als Lösemittel durch eine Polykondensation bei 50 °C hergestellt.
Eine Lösung dieses Polyaramids wurde auf ein Polypropylen-Trägervlies aufgebracht und in Wasser bei 20°C koaguliert.
Der Permeatfluß einer so hergestellten Ultrafiltrationmembran und das Rückhaltevermögen gegenüber gelösten Makromolekülen wurden bei Drucken von 3,0 bar bei 20°C in einer gerührten zylindrischen Zelle bestimmt (500 U/min, 250 ml, Membranfläche 38 $cm^2$).

Das Rückhaltevermögen ist definitionsgemäß

$$R = \frac{C_1 - C_2}{C_1} \cdot 100\ [\%]$$

$C_1$ ist die Konzentration der wäßrigen Testlösung,
$C_2$ ist die Konzentration im Permeat.

Beispiel : ≥ 95 mol % (0,8 Terephthalsäuredichlorid (TPC) + 0,2 Isophthalsäuredichlorid (IPC)) 100 mol % 2,2'-Bis[4-(4'-aminophenoxy)-phenyl]-propan (BAP)

Testsubstanzen für die Rückhaltebestimmungen und verwendete Zusätze: Als Testlösung wurden wäßrige Polyvinylpyrrolidonlösungen sowie wäßrige Lösungen fraktionierter Dextrane verwendet. Die Dichtemessungen erfolgten mit einem Dichtemeßgerät ®DA 210 der Firma Kyoto Electronics.

| | |
|---|---|
| K 30: | Polyvinylpyrrolidon (MW 49.000) (®Luviskol K30, BASF) 2 %ige wäßrige Lösung |
| T 10: | Dextran (MW 10.000) (®Dextran T10, Pharmacia), 1 %ige wäßrige Lösung |
| Dextranblau: | Dextran mit Farbstoffmarkierung (®Dextranblau, Pharmacia), (MW 2.000.000) 0,5 %ige wäßrige Lösung |
| K 90: | Polyvinylpyrrolidon (MW 1.200.000) (®Luviskol K90, BASF) |
| Aerosil: | pyrogenes Kieselgel (®Aerosil 200, Degussa) |

Beispiel 2:

Copolyaramid aus TPC, IPC und BAP

$[\eta]$ = 100 ml/g

Polymerlösung $C_2$ = 10 % in NMP

| Zusätze * | Membranschichtdicke [$\mu m$] | Wasserfluß [$l/m^2h$] | Rückhalt [%] K 30 | Permeatfluß [$l/m^2h$] |
|---|---|---|---|---|
| - | 300 | 186 | 84 | 34 |
| 5 % Aerosil | 330 | 210 | 92 | 30 |

* bezogen auf die Polymerlösung

Dextranblaulösung wird vollständig entfärbt

## Patentansprüche

1. Semipermeable, poröse, asymmetrische, trägerfreie oder auf einem Trägervlies oder -gewebe angeordnete Membran für Mikro-, Nano- und Ultrafiltration bestehend aus einem Copolyaramid, das aus mindestens zwei unterschiedlichen, wiederkehrenden Struktureinheiten der Formel (I)

$$-\overset{\displaystyle O}{\overset{\|}{C}}-Ar-\overset{\displaystyle O}{\overset{\|}{C}}- \qquad (I)$$

und Struktureinheiten der Formel (II)

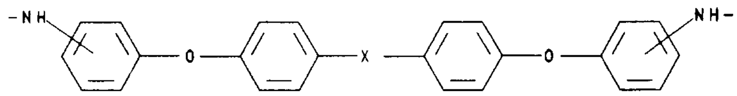

(II)

zusammengesetzt ist, wobei das Molverhältnis von (II)/(I) 0,9 bis 1,1 betragt und,

-Ar- einem zweiwertigen, aromatischen oder heteroaromatischen Rest bedeutet, wobei sich die zwei Carbonylgruppen des Ar- Restes an nicht benachbarten Ringkohlenstoffatomen befinden und dieser gegebenenfalls mit einem oder zwei verzweigten oder unterzweigten $C_1$-$C_3$-Alkyl- oder Alkoxyresten, Aryl- oder Aryloxyresten oder $C_1$-$C_6$-Perfluoralkyl- oder Perfluoralkoxyresten oder mit Fluor, Chlor, Brom oder Jod substituiert ist, und

-X- eine Gruppe $-C(CH_3)_2-$, $-C(CF_3)_2-$, -CO-, -SO-, $-SO_2-$, $-CH_2-$, -S- oder -O- oder eine direkte Bindung bedeutet.

**2.** Membran nach Anspruch 1, dadurch gekennzeichnet, daß das Copolyaramid einen Staudinger-Index im Bereich von 50 bis 1000 $cm^3/g$ aufweist.

**3.** Membran nach Anspruch 1, dadurch gekennzeichnet, daß sie eine Flachmembran ist mit einer Dicke im Bereich von 10 bis 300 µm.

**4.** Membran nach Anspruch 1, dadurch gekennzeichnet, daß sie auf einem für strömungsfähige Medien durchlässigen Trägervlies oder auf einem Trägergewebe angeordnet ist.

**5.** Membran nach Anspruch 4, dadurch gekennzeichnet, daß das Trägervlies Polyethylenterephthalat oder Polypropylen enthält.

**6.** Membran nach Anspruch 1, dadurch gekennzeichnet, daß sie eine Hohlfasermembran ist.

**7.** Verfahren zur Herstellung einer Membran nach Anspruch 1, bei dem man eine Lösung des in Anspruch 1 definierten Copolyaramids in einem aprotisch-polaren Lösungsmittel auf eine Unterlage als flüssige Schicht ausbreitet und danach auf die flüssige Schicht eine Fällflüssigkeit aufbringt, die mit dem Lösungsmittel der Lösung mischbar ist, in der aber das Copolyaramid als Membran ausgefällt wird, wobei das Lösungsmittel für das Copolyaramid aprotische, polare Lösungsmittel vom Amidtyp als Hauptbestandteil enthält und die Lösung des Copolyaramids eine Konzentration im Bereich von 3 bis 50 Gew.-% aufweist.

**8.** Verfahren nach Anspruch 7, dadurch gekennzeichnet, daß als weitere Bestandteile des Lösungsmittels leichtflüchtige Substanzen wie Tetrahydrofuran, Aceton oder Methylenchlorid verwendet werden.

**9.** Verfahren nach Anspruch 7, dadurch gekennzeichnet, daß als Fällflüssigkeit Alkohole wie Methanol, Ethanol, Isopropanol, Ethylenglykol oder Glycerin verwendet werden.

**10.** Verfahren nach Anspruch 7, wobei die Membran, bei der praktisch das gesamte Lösungsmittel durch Fällflüssigkeit ersetzt ist, einer Wärmebehandlung in einer Flüssigkeit unterzogen wird.

**11.** Verfahren nach Anspruch 10, dadurch gekennzeichnet, daß die Flüssigkeit Wasser, ein- oder mehrwertiger Alkohol oder ein polar aprotisches Lösungsmittel vom Amidtyp oder ein Gemisch dieser Flüssigkeiten ist und die Wärmebehandlung bei Temperaturen im Bereich von 60 bis 140° C durchgeführt wird.

## Claims

**1.** A semipermeable, porous, asymmetric membrane for micro, nano- and ultrafiltration, which membrane is support-free or arranged on a support nonwoven web or support fabric and consists of a copolyaramide which is composed of at least two different, recurring structural units of the formula (I)

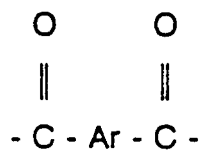

(I)

and structural units of the formula (II)

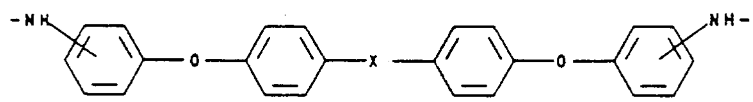

(II)

where the molar ratio of (II)/(I) is 0.9 to 1.1 and

-Ar- is a divalent, aromatic or heteroaromatic radical, where the two carbonyl groups of the Ar radical are located on unadjacent ring carbon atoms and the Ar radical is unsubstituted or substituted by one or two branched or unbranched $C_1$-$C_3$-alkyl or $C_1$-$C_3$-alkoxy radicals, aryl or aryloxy radicals or $C_1$-$C_6$-perfluoroalkyl or $C_1$-$C_6$-perfluoroalkoxy radicals or by fluorine, chlorine, bromine or iodine, and

-X- is a group $-C(CH_3)_2-$, $-C(CF_3)_2-$, -CO-, -SO-, $-SO_2-$, $-CH_2-$, -S- or -O- or a direct bond.

**2.** The membrane as claimed in claim 1, wherein the copolyaramide has a Staudinger index in the range from 50 to 1000 $cm^3/g$.

**3.** The membrane as claimed in claim 1, wherein it is a flat membrane having a thickness in the range from 10 to 300 μm.

**4.** The membrane as claimed in claim 1, wherein it is arranged on a support nonwoven web or on a support fabric, said support being permeable to flowable media.

**5.** The membrane as claimed in claim 4, wherein the support nonwoven web contains polyethylene terephthalate or polypropylene.

**6.** The membrane as claimed in claim 1, wherein it is a hollow fiber membrane.

**7.** A process for the production of a membrane as claimed in claim 1, in which a solution of the copolyaramide defined in claim 1 in an aprotic-polar solvent is spread as a liquid layer on a support and then a precipitant liquid is applied to the liquid layer, which precipitant liquid is miscible with the solvent of the solution, but in which the copolyaramide is precipitated as a membrane, where the solvent for the copolyaramide contains aprotic polar solvents of the amide type as the major constituent and the solution of the copolyaramide has a concentration in the range from 3 to 50 % by weight.

**8.** The process as claimed in claim 7, wherein readily volatile substances such as tetrahydrofuran, acetone or methylene chloride are used as further constituents of the solvent.

**9.** The process as claimed in claim 7, wherein alcohols such as methanol, ethanol, isopropanol, ethylene glycol or glycerol are used as the precipitant liquid.

**10.** The process as claimed in claim 7, where the membrane, in which virtually all the solvent has been replaced by precipitant liquid, is subjected to a heat treatment in a liquid.

**11.** The process as claimed in claim 10, wherein the liquid is water, a mono- or polyhydric alcohol or a polar aprotic solvent of the amide type or a mixture of these liquids and the heat treatment is carried out at temperatures in the range from 60 to 140°C.

**Revendications**

1. Membrane semi-perméable, poreuse, asymétrique, sans support ou disposée sur un support constitué d'un tissu ou d'un tissu non-tissé, pour micro-, nano-, et ultrafiltration, qui est constituée d'un copolyaramide constitué d'au moins deux motifs structuraux répétitifs différents de formule (I)

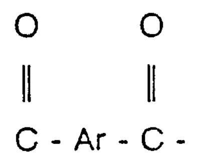

(I)

et de motifs structuraux de formule (II)

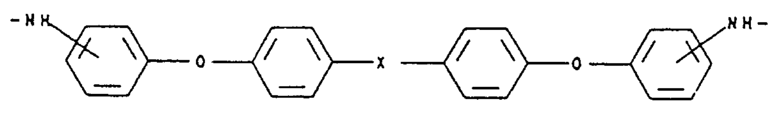

(II)

où le rapport en moles (II) à (I) est de 0,9 à 1,1 , et

-Ar- représente un résidu divalent, aromatique ou hétéroaromatique, auquel cas les deux groupes carbonyle se trouvent sur des atomes de carbone de cycle non voisins, et le radical -Ar- est éventuellement substitué par un ou deux substituants alkyle ou alkoxy en $C_1$-$C_3$ à chaîne droite ou ramifiée, des substituants aryle ou aryloxy, ou encore des substituants perfluoralkyle ou perfluoralkoxy en $C_1$-$C_6$, ou encore par du fluor, du chlore, du brome ou de l'iode, et

-X- est un groupe $-C(CH_3)_2-$, $-C(CF_3)_2-$, -CO-, -SO-, $-SO_2-$, $-CH_2-$, -S- ou -O-, ou encore représente une liaison directe.

2. Membrane selon la revendication 1, caractérisée en ce que le copolyaramide a un indice de Staudinger compris dans l'intervalle de 50 à 1000 $cm^3$/g.

3. Membrane selon la revendication 1, caractérisée en ce qu'il s'agit d'une membrane plate ayant une épaisseur comprise dans l'intervalle de 10 à 300 $\mu$m.

4. Membrane selon la revendication 1, caractérisée en ce qu'elle est disposée sur un non-tissé support ou sur un tissu support perméable aux fluides susceptibles de s'écouler.

5. Membrane selon la revendication 4, caractérisée en ce que le non-tissé support contient du poly(téréphtalate d'éthylène) ou du polypropylène.

6. Membrane selon la revendication 1, caractérisée en ce qu'il s'agit d'une membrane à fibres creuses.

7. Procédé de fabrication d'une membrane selon la revendication 1, dans lequel on étale sur un substrat, sous forme d'une couche liquide, une solution du copolyaramide défini dans la revendication 1 dans un solvant aprotique polaire, puis on applique sur la couche liquide un liquide de précipitation, miscible au solvant de la solution, mais qui amène le copolyaramide à se séparer par précipitation sous forme d'une membrane, où le solvant du copolyaramide contient comme constituant principal des solvants aprotiques polaires de type amide, la solution du copolyaramide ayant une concentration de 3 à 50 % en poids.

8. Procédé selon la revendication 7, caractérisé en ce qu'on utilise comme constituants additionnels du solvant des substances très volatiles telles que le tétrahydrofuranne, l'acétone, ou le chlorure de méthylène.

9. Procédé selon la revendication 7, caractérisé en ce qu'on utilise comme liquide de précipitation des alcools tels que le méthanol, l'éthanol, l'isopropanol, l'éthylèneglycol ou le glycérol.

**10.** Procédé selon la revendication 7, dans lequel la membrane, dans laquelle la presque totalité du solvant a été remplacée par le liquide de précipitation, est soumise à un traitement thermique dans un liquide.

**11.** Procédé selon la revendication 10, caractérisé en ce que le liquide est l'eau, un mono- ou un polyalcool, ou un solvant aprotique polaire du type amide ou un mélange de ces liquides, et le traitement thermique est mis en oeuvre à des températures comprises dans l'intervalle de 60 à 140°C.